Europäisches Patentamt

European Patent Office

Office européen des brevets

(11) Veröffentlichungsnummer: **0 001 101**
**B1**

(12) **EUROPÄISCHE PATENTSCHRIFT**

(45) Veröffentlichungstag der Patentschrift: 09.01.85

(21) Anmeldenummer: 78100806.5

(22) Anmeldetag: 01.09.78

(51) Int. Cl.⁴: **C 02 F 1/74, C 02 F 3/10, B 01 D 37/00**

(54) **Verfahren und Vorrichtung zum Reinigen von Abwässern in einer mehrstufigen Filteranlage.**

(30) Priorität: 02.09.77 DE 2739690

(43) Veröffentlichungstag der Anmeldung:
21.03.79 Patentblatt 79/06

(45) Bekanntmachung des Hinweises auf die
Patenterteilung:
09.01.85 Patentblatt 85/02

(84) Benannte Vertragsstaaten:
BE CH DE FR GB LU NL SE

(56) Entgegenhaltungen:
CH-A- 191 576
CH-A- 241 909
DE-A-1 459 485
DE-A-2 315 615
DE-A-2 316 491
FR-A-2 145 887
FR-A-2 190 744
US-A-4 025 426

(73) Patentinhaber: Palmer, Willy-F.
von Vollmarstrasse 33
D-8160 Miesbach (DE)
(73) Patentinhaber: Thielke, Karin
von Vollmarstrasse 33
D-8160 Miesbach (DE)

(72) Erfinder: Palmer, Willy-F.
von Vollmarstrasse 33
D-8160 Miesbach (DE)

(74) Vertreter: Seibert, Rudolf, Dipl.-Ing.
Tattenbachstrasse 9
D-8000 München 22 (DE)

Courier Press, Leamington Spa, England.

**Beschreibung**

Die vorliegende Erfindung bezieht sich auf ein Verfahren zum Reinigen von industriellen und/oder kommunalen Abwässern gem. den Merkmalen des einleitenden Teils des Patentanspruches 1 und auf eine Vorrichtung zur Durchführung des Verfahrens.

Zur Reinigung von verschmutztem Wasser und zwar von durch Haushalte im weitesten Sinne verschmutztem Wasser (kommunales Abwasser) bzw. von durch Industrieanlagen verschmutztem Wasser (industrielles Abwasser) sind verschiedenste Verfahren und Methoden bekannt geworden.

Diese Verfahren und Methoden lassen sich im wesentlichen in 3 Gruppen zusammenfassen, nämlich die mechanische, die chemische und die biologische Abwasserreinigung.

Dabei wird unter einer mechanischen Abwasserreinigung im wesentlichen jede mechanische Trennung von im Wasser mitgeführten Stoffen, auch von Schwebestoffen, verstanden, d.h. eine Reinigung des Wassers über Rechenanlagen, Sandfanganlagen bis hin zur Reinigung des Wassers in Filteranlagen, in welchen die Schwebstoffe zurückgehalten werden. Durch diese Art der Reinigung können gelöste und kolloidale Bestandteile des Abwassers nicht entfernt werden.

Bei einer chemischen Abwasserreinigung wird mit Hilfe von Zusätzen das saubere oder alkalische Abwasser beispielsweise mit Kalk oder mit Salz- oder Schwefelsäure neutralisiert und die dabei ausfallenden Feststoffe werden in einer nachgeschalteten mechanischen Klärung entfernt. Durch dieses Verfahren werden an sich kolloidale Substanzen entfernt.

Die biologische Abwasserreinigung dient der Entfernung gelöster organischer Substanzen. Die biologische Reinigung entspricht dabei am stärksten der natürlichen Selbstreinigung in Gewässern, die aber die großen Schmutzmengen heute nicht mehr verkraften kann, weil durch die hohen Schmutzbelastungen in den Gewässern im allgemeinen der zur Reinigung notwendige gelöste Sauerstoff nicht mehr vorhanden ist.

Est ist auch bekannt, die vorstehend umrissenen Reinigungsprozesse in einer Abwasserreinigungsanlage kombiniert, beispielsweise nacheinander einzusetzen.

So ist beispielsweise durch die FR—A— 2 190 744 ein Verfahren zur Reinigung von mit organischen Stoffen belastetem Wasser bekannt geworden, bei dem dem zu reinigenden Wasser in verschiedenen Behältern jeweils Luft zugeführt wird, um die Reinigungswirkung durch Filtration und Adsorption von in den Reinigungsbehältern vorhandener aktiver Kohle durch eine biologische Aufbereitung zu verbessern.

Ein derartiges Verfahren ist wegen des großen Bedarfs an Aktivkohle für große Abwassermengen nicht einzusetzen.

Weiter ist es durch die CH—A—241 909 bekanntgeworden, it organischen Schadstoffen (geröstetem Flachs) belastetes Abwasser in einer Kombination einer Filteranordnung mit Lufteinleitung zu reinigen, wobei durch die einzuleitende Luft der aerobe Zustand des Wassers aufrechterhalten und gleichzeitig ein Überdruck erzeugt wird, der das Ausfällen der organischen Substanzen erleichtert.

Die vorgenannten Verfahren bzw. Anlagen sind für große Abwassermengen wegen Ihres speziellen Aufbaus nicht geeignet. Die Schwierigkeit bei der Dimensionierung von Abwasseranlagen besteht nämlich darin, daß heute sehr große Abwassermengen, die sich aufgrund des steigenden Lebenstandardes dauernd erhöhen, gereinigt werden müssen, wobei die Kapazität von Sandfängen, Absatzbecken (zur mechanischen Reinigung) und insbesondere der Tropfkörperanlagen, Abwasserteiche und so weiter (biologische Reinigung) mit Rücksicht auf die allgemein notwendige hohe Verweilzeit bei den herkömmlichen Reinigungsverfahren meist recht bald nach der Inbetriebnahme nicht mehr ausreicht. Eine Überlastung muß aber zu einer mangelhaften Reinigung führen, was bedeutet, daß das angeblich gereinigte Wasser an den natürlichen Wasserhaushalt abgegeben wird, ehe die an sich vorgeschriebenen zulässigen Restschmutzwerte durch die Reinigung erreicht werden können.

Aufgabe der Erfindung ist es, ein Verfahren anzugeben, bei welchem im reinen Durchlaufbetrieb die Vorteile der 3 vorgenannten Reinigungsarten kombiniert werden können, wobei Durchlaufzeit bzw. Abbauzeit der Schmutzwerte des zu reinigenden Wassers trotz der gewünschten biologischen und biochemischen Reinigung nicht größer sein soll als bei einfachen Filteranlagen zur mechanischen Reinigung.

Diese Aufgabe wird mit dem Verfahren nach der Erfindung durch Anwendung der Maßnahmen gemäß dem Kennzeichen des Patentanspruches 1 gelöst.

Vorteilhafte Weiterbildungen dieses Verfahrens zur Lösung der vorgenannten Aufgabe sind Gegenstand der Unteransprüche 2—10 und das Verfahren kann mit einer Vorrichtung mit den Merkmalen der Patentansprüche 11— 23 realisiert werden.

Bei dem Verfahren nach der Erfindung wird ebenso wie bei bekannten Anlagen eine mechanische Reinigung mit einer biologischen Reinigung, die durch Lufteintrag in das zu reinigende Wasser in Verbindung mit genau definierten Stoffen ausgelöst wird, kombiniert. Im Gegensatz zu bekannten Anlagen erfolgt aber der Lufteintrag im unteren Bereich eines als Steigleitung ausgebildeten Behälters in feinst zerteilter Form über eine Vielzahl von Eintragdüsen, wobei oberhalb des Lufteintragbereiches eine Mehrzahl von eng aufeinander folgenden, im Wege des zu reinigenden Wassers abwechselnden Filterschichten vorgesehen sind, die zur Neutralisation, zur mechanischen, biologischen, katalytischen und adsorptiven Reinigung dienen. Dabie weist mindestens eine Schicht stückigen Kalkstein und mindestens eine stückige Hochofenschlacke, stückige Braunkohlenschlacke bzw. Cewilith (eine aufbereitete Schmelzkammer-(Granulat)-Schlacke auf. Das dann so mit Luft angereicherte und über diese Schichten geführte Abwasser wird anschließend über ein geschlossenes Leitungssystem einem Filtersystem mit mindestens einem Filterbehälter zugeführt, in welchem die einzelnen Reinigungsmethoden mit Hilfe von vorzugsweise ebenfalls in eng aufeinanderfolgenden Schichten angeordneten Filterkörpern zur mechanischen, biologischen, katalytischen und adsorptiven Reinigung durchgeführt werden.

Mit einem derartigen Verfahren ist es durch die Kombination der einzelnen Reinigungsverfahren technologisch möglich geworden, aus allen Abwässern notfalls in einer Stufe (bestehend aus Steigleitung und Filterbehälter) die Gesamtfracht organischer Belastungsmedien (biologisch leicht—und schwer abbaubare organische Stoffe) zu eliminieren.

Bei dem Verfahren nach der Erfindung werden keinerlei chemische Fällungs- oder Flockungsmittel beigegeben. Lediglich in langen Zeitabständen werden die systemmäßig eingebrachten Neutralisierungsmedien ergänzt. Während bei den konventionellen und vorbekannten Verfahren vielfach eine gesonderte Schlammbehandlung notwendig ist, ist bei den Verfahren nach der Erfindung bei den meisten Industrieabwässern keine besondere Schlammbehandlung erforderlich, da der Schlamm, der sich im Rückspülwasser befindet, von untergeordneter bedeutung ist.

Dabei werden erfindungsgemäß die einzelnen Materialien zur mechanischen Reinigung, die Füllkörper zur biologischen bzw. biochemischen Reinigung abwechselnd auf im Vergleich zum Durchflußweg des Wassers durch das System jeweils nur relativ kurzen Strecken wirksam gemacht, so daß die verschiedenen Reinigungsarten sich ständig wiederholen.

Dabei dient die Verwendung von stückigem Kalkstein, stückiger Hochofenschlacke und Braunkohlenschlacke im besonderen für eine Neutralisation des zu reinigenden Wassers, wobei aber in der Steigleitung—und auch in dem anschließenden Filterbehälter—Füllkörper aus Metall und zwar vornehmlich Edelmetall, aber auch aus Eisen oder Eisenerz, Buntmetallen oder Legierungen der vorgenannten Metalle sowie Füllkörper aus Kunststoff, Mineralien und so weiter vorgesehen sind, an welchen sich, wie anhand der Ausführungsbeispiele noch erläutert werden wird, sehr rasch ein biologischer Rasen, vornehmlich auf Hydrakohle (nicht aktivierte, feinkörnige Anthrazitkohle 1—5 mm) und auf der Hochofenschlacke bildet, welche ihrerseits für den biologischen Abbau der Schmutzlast des zu reinigenden Wassers sorgt. Die Verwendung der verschiedenen Stoffe bewirkt dabei eine Neutralisation, eine kalte Oxydation sowie biochemische Umwandlungen.

Gemäß einer Weiterbildung des Erfindungsgedankens wird der Lufteintrag im Laufe des Durchströmungsprozesses regelmäßig wiederholt, wobei, wie anhand der später gegebenen Ausführungsbeispiele noch erläutert wird, aus Wirtschaftlichkeitsgründen eine Luftführung zwischen verschiedenen Stufen der Anlage durchaus möglich ist. Wesentlich ist in jedem Fall, daß die Luft möglichst fein verteilt über eine Vielzahl von Düsen dem Wasser zugesetzt wird, um schon beim Eintrag eine gute Durchmischung zwischen dem zu reinigenden Wasser und den Luftbläschen zu erzielen.

Das so mit Luft angereicherte Abwasser wird gemäß dem Verfahren nach der Erfindung dann einem Filter behälter bzw. einem Filtersystem zugeführt, wobei jeder Filter behälter neben Siebeinrichtungen und ähnlichen Einrichtungen zur mechanischen Reinigung des Wassers noch Abschnitte bzw. Materialien zur biologischen Reinigung, z.B. auch Tropfkörper, enthält. Es ist, wie oben schon erwähnt, eine wesentliches Teilmerkmal nach der Erfindung, daß verschiedene Reinigungsarten, also insbesondere die mechanische, die biologische und adsorbierende Reinigung des Wassers jeweils eng verzahnt miteinander und nicht für sich in begrenzten Abschnitten des gesamten Systems erfolgt.

Dabei geht das Verfahren nach der Erfindung so weit, daß praktisch in jeder einzelnen Stufe des Abbausystems mit mehr oder weniger Bevorzugung einzelner Teilmaßnahmen jeweils.

1.) Eine Neutralisation,
2.) Eine Ausblasen oder Ausstrippen,
3.) Eine katalytische Oxidation,
4.) Ein biologischer oder biochemischer Abbauprozeß über vorhandene oder gezüchtete Mikroorganismen und Folgeorganismen (Enzyme),
5.) Eine Filtration und Biofiltration (Mischfiltration unter Beimengung von synthetischen Granulaten),
6.) Eine allgemeine Adsorption und ggfs,
7.) Eine Adsorption unter Verwendung von Aktivkohle

stattfindet.

Hierdurch und nur hierdurch werden mit einer Vorrichtung zur Durchführung des Verfahrens nach der Erfindung die hohen Abbauwerte in extrem kurzen Durchlaufzeiten ermöglicht Außerdem wird erreicht, daß, wie im einzelnen noch beschrieben wird, das Wirksamwerden der biologischen Reinigung nicht erst lange nach Inbetriebnahme einer Anlage, sondern unmittelbar nach ihrer Inbetriebnahme innerhalb von 2 Stunden voll einsetzt.

Eine Anlage nach dem angezeigten Verfahren kann in beliebig langen Zeitabständen abgeschaltet und wieder in Betrieb genommen werden, ohne daß der Gesamtreinigungsprozeß in irgendeiner Weise gestört wird.

Selbst nach Unterbrechungen von Wochen oder Monaten treten keinerlei Störungen im Reinigungsprozeß auf. Lediglich vor Inbetriebnahme ist eine Rückspülung zu empfehlen.

Mengen und Stoßbelastungen können den Abbauprozeß nicht gefährden.

Dies ist im besonderen auch für transportable Reinigungs-anlagen, für wleche sich das Verfahren nach der Erfindung besonders eignet, von besonderer Bedeutung. Hierbei spielt der Einsatz von Kohle in den einzelnen Filterstufen eine besondere Rolle, wobei darauf hingewiesen werden kann, daß für die Zwecke der biologischen Reinigung nicht etwa Aktivkohle sondern zunächst einfache Hydrakohle, feinkörniger Kohlenstoff, in entsprechender Körnung, verwendet wird. Diese feinkörnige Hydrakohle zusammen mit dem mit Sauerstoff angereicherten Abwasser erzeugt in ca. 2 Stunden in den Bereichen der Füllkörper in der Steigleitung und in den Filterbahältern einen biologischen Rasen, der eine biologische Reinigung ermöglicht und der mitverantwortlich ist für eine rasche Beseitigung auch der kolloidalen Bestandteile des Abwassers.

Es sei an dieser Stelle darauf hingewiesen, daß durch den erwähnten geschlossenen Aufbau des Systems mit dem kontinuierlichen Wasserdurchlauf eine vollständige Abwasserreinigung ohne irgendeine Umweltbelastung ermöglicht wird. Tatsächlich findet keinerlei Immission von Schadstoffen oder auch nur Geruchstoffen statt, wenn, was im Rahmen der Erfindung möglich ist, die gegebenenfalls aus einzelnen Behältern über Ventile oder gesteuert austretende Luft gesammelt dem Reinigungsprozeß wieder zugeführt oder gegebenenfalls auch getrennt durch ein Luftfilter geleitet wird.

Einzelheiten des Verfahrens nach der Erfindung werden anhand der folgenden sich auf verschiedene Vorrichtungen zur Durchführung dieses Verfahrens beziehenden Ausführungen in Verbindung mit den anliegenden Zeichnungen erläutert.

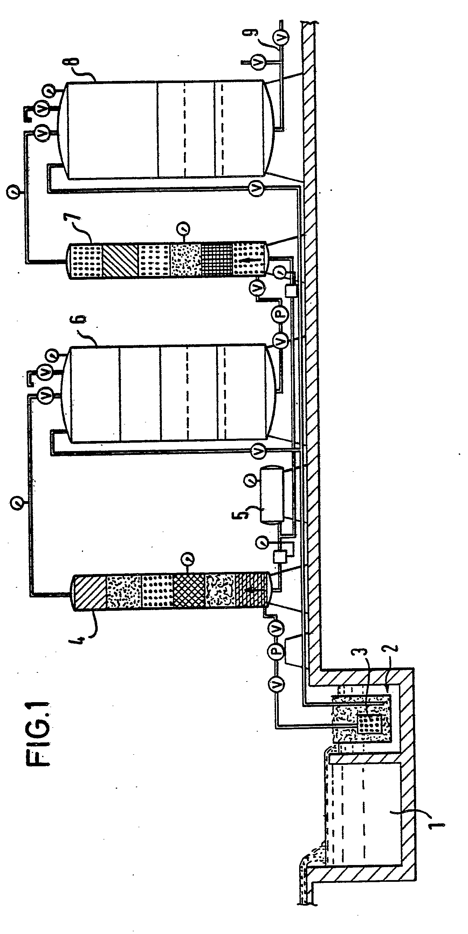

Anhand der Fig. 1 sei dabei zunächst der grundsätzliche Aufbau einer Vorrichtung, wie sie zur Durchführung des Verfahrens nach der Erfindung aufgebaut sein kann, erläutert. Hierbei wird anhand der Fig. 1 zunächst lediglich eine Übersichtschema einer Gesamtanlage gegeben, ohne daß hierdurch die Anwendung der Erfindung auf eine Anlage derartigen Aufbaus beschränkt werden soll.

Bei der in Fig. 1 dargestellten Anlage zur Realisierung des Verfahrens nach der Erfindung wird das Abwasser zunächst zur mechanischen Vorklärung in ein Absatzbecken 1 gegeben, von welchem es in ein Vorneutralisationsbekken 2 im Überaluf gelangt. In diesem Vorneutralisationsbecken befindet sich ein Ansaugfilter 3, über welches das zu reinigende Wasser zur weiteren Behandlung abgesaugt wird.

Das Abwasser wird dann erfindungsgemäß inder ersten Steigleitung 4, welche als Lufteintragsvorrichtung (Air-injection) wirkt, start mit Luft durchsetzt. Die Zuführung der Luft erfolgt dabei über ein Düsensystem, wie noch erläutert wird. Für die Praxis haben sich hierbei Düsensysteme als vorteilhaft erwiesen, bei welchen die Luft über etwa 20 bis 100 Poren pro cm² austritt. Hierbei empfiehlt es sich gemäß einer Weiterbildung des Erfindungsgedankens, die Luft unter einem Druck einströmen zu lassen, der etwa 10% höher liegt, als der Druck, dem das zu reinigende Wasser an dieser Stelle unterworfen ist. Wenn also beispielsweise das zu reinigende Wasser mit einem Druck von 2 atü 1,96 bar Überdruck an dieser Stelle zugeführt wird, dann sollte die zu injizierende Luft etwa mit einem Druck von 2,2 atü 2,16 bar Überdruck in das Wasser über das Düsensystem hineingedrückt werden. Ein derartiger Druckunterschied erscheint notwendig aber auch ausreichend, um eine genügende Menge von Luft im Abwasser zu verteilen und gleichzeitig die Bildung von größeren Luftblasen zu verhindern, die auftreten könnten, wenn die Luft mit zu großem Druck zugeführt wird.

Das mit Luft durchsetzte und angereicherte Abwasser steigt dann aufgrund das Überdruckes in der Steipleitung 4 nach oben. Es ist gemäß der Erfindung mit körnigem Gut zur Neutralisation, d.h. zum Stabilisieren auf einen neutralen pH-Wert, zur katalytischen Oxidation (kalten Oxidation) sowie gegebenenfalls mit Füllkörpern zur biologischen bzw. biochemischen Reinigung des Abwassers versehen. Dieser Aufbau wird an späterer Stelle noch im einzelnen erläutert.

Das auf diese Weise schon vorgereinigte und stark mit Luft durchsetzte Abwasser wird dann über eine Umlenkleitung praktisch ohne Überdruck dem Filter 6 behälter zugeführt. An der höchsten Stelle der Umleitung befindet sich ein Ablaßventil zum Ablassen von sich gegebenenfalls an dieser Stelle absetzenden Luftblasen. Das Abwasser strömt dann, d.h. tropft und fließt durch den Filterbehälter 6, wobei die sich durch die biologische und biochemische Reinigung bildenden Stoffe ebenso wie noch vorhandene Fremdstoffe ausgefiltert und abgelagert werden. Hierzu wird gegebenenfalls ein Schmutzsammelbecken am Boden vorgesehen.

Ein möglicher Aufbau dieses Filter behälters wird an späterer Stelle erläutert.

Am Boden des Filter behälters, und zwar vorzugsweise unmittelbar unter der Wasseroberfläche im Schmutzsammelbecken, wird dann das schon weitgehend gereinigte Wasser abgenommen und unter Verwendung einer weiteren Pumpe über eine zweite Steigleitung 7 dem nächsten Filter behälter 8 des Systems wiederum von oben zugeführt.

Dabei wird erfindungsgemäß an der Stelle, an welcher das Wasser unter Druck steht, erneut atmosphärische Luft eingetragen.

Der Aufbau des Filter behälters 8 wird an späterer Stelle beschrieben. Das gereinigte Wasser kann am Ende des Filter behälters 8 über das Rohr 9 abgenommen und beispielsweise im Recycling einem Fertigungsprozeß erneut zugeführt werden.

Im dargestellten Beispiel sind sowohl die das Wasser als auch die Luft führenden Verbindungsrohre nur als ein Strich dargestellt, um die Übersichtlichkeit nicht zu gefährden. Es ist dabei zu sehen, daß das aus den Filter behältern austretende Abluftgemisch dem Vorneutralisierungsbehälter 2 am Boden wieder zugeführt wird, und zwar in einer möglichst feinen Zerstäubung, beispielsweise über 1 000 Düsenöffnungen. Dadurch wird der Vorneutralisierungsbehälter belüftet und die Abluft einer Naßwäsche unterzogen.

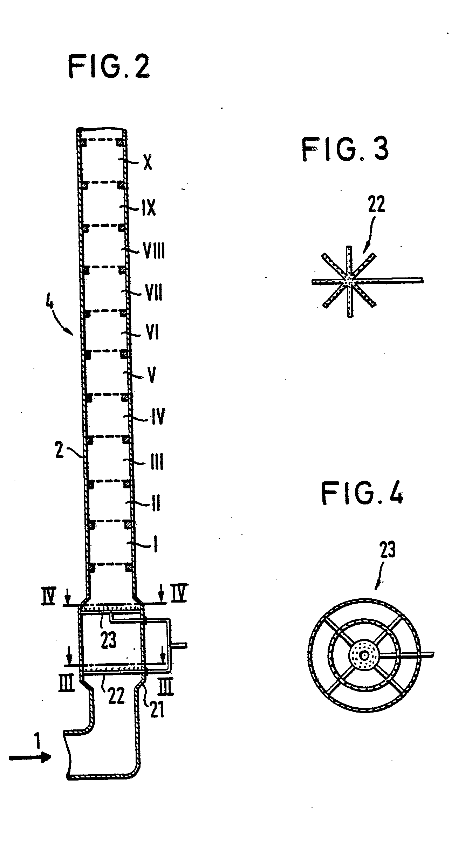

In Fig. 2 ist nun—ebenfalls schematisch, jedoch in etwas detaillierterer Ausführung—der Aufbau und eine mögliche Ausgestaltung des als Steigleitung ausgebildeten Behälters 4, wie er anhand der Fig. 1 in seiner Funktion schon erläutert wurde, schematisch dargestellt.

Das zu reinigende Abwasser wird in dem waagrecht verlaufenden Zuflußrohr, wie in Fig. 1 gezeigt, zugeführt und dann zunächst der erfindungsgemäß vorausgesetzten Air-injection im unteren Bereich der Steipleitung 21 unterworfen. Hierzu ist—gemäß der Ausführungsform nach Fig. 2—dieser im unteren Bereich etwas aufgeweitet. In dieser Aufweitung sind Düsensysteme 22 und 23 angeordnet, über die beim Vorbeiströmen des Abwassers die zu injizierende Luft zugeführt wird.

Als Düsensysteme kommen die verschiedensten Konfigurationen in Frage, mit welchen über eine Vielzahl von Düsen Luft in vorbeiströmendes Wasser gepreßt werden kann. Hierbei sind mit Vorteil Luftverteilungssysteme anwendbar, die im Aufbau beispielsweise einer einfachen Brause entsprechen.

Besonders vorteilhaft sind jedoch Leitungssysteme, wie sie beispielhaft in den Figuren 3 und 4 dargestellt sind, da in diesem Fall das mit Luft zu durchsetzende Abwasser beim Umströmen der Leitungssysteme selbst relativ nah in den Bereich der einzelnen Düsen kommt. Für die Zwecke der Erfindung sollen hierbei etwa 10 bis 100 Düsen pro cm$^2$ Durchströmquerschnitt vorgesehen werden, um die notwendige hohe Luftanreicherung des Abwassers sicher zu erreichen.

Hierbei ist es, wie auch in Fig. 2 gezeigt, besonders vorteilhaft, zwei oder mehr Lufteintragsanordnungen hintereinander anzuordnen, da die einzelnen Luftverteilungsleitungen nicht beliebig nah nebeneinander angeordnet werden können mit Rücksicht darauf, daß ja das stark verschmutzte Wasser frei durch das Eintragssystem hindurchtreten muß.

Für verschiedene Zwecke genügt aber durchaus ein einziges Eintragssystem. In anderen Fällen können auch mehrere Eintrag-(Düsen-)systeme im unteren Bereich der Steigleitung 4 angeordnet werden. Insoweit ist die Darstellung nach Fig. 2 ebenfalls nur beispielhaft zu werten.

Die Steigleitung selbst ist mit einer Vielzahl von entsprechend großmaschigen Durchlaßsieben in eine Vielzahl von Durchströmungskammern unterteilt, welche gemäß der Erfindung mit Materialien zur Neutralisation, biologischen bzw, biochemischen Reinigung, kalten Oxidation und/oder zur Adsorption geeignet sind. Bei dem Ausführungsbeispiel ist hierbei die Länge des Rohres in insgesamt zehn Durchströmungskammern unterteilt, von welchen die unterste mit Kalkstein, die nächste mit Hochofenschlacke, die dritte mit Kohle, die vierte mit Braunkohlenschlacke usw. mehr oder weniger angefüllt sind.

Hierbei dient insbesondere Kalkstein sowie die Hochofenschlacke und die Braunkohlenschlacke zur Neutralisation des Abwassers. Diese Neutralisation wird im wesentlichen im Wege einer kalten Oxidation erreicht.

Es sei an dieser Stelle darauf hingewiesen, daß es sich bei der Behandlung eines Abwassers mit extremen pH-Werten emfehlen kann, das Abwasser von der Zuführung zur Steigleitung und damit von der Air-injection durch ein Vorneutralisationsbecken (Fig. 1) über Kalkstein, Hochofen schlacke und/oder Braunkohlenschlacke sowie Hydrakohle zu leiten, um eine erste Neutralisation einzuleiten, welche dann durch die Zuführung des feinstverteilten Sauerstoffes eine raschere Änderung des pH-Wertes über eine kalte Oxidation ermöglicht.

Wenn bei der Ausführungsform nach Fig. 2 von Stufe zu Stufe inder Steigleitung unterschiedliche Füllkörper bzw. Materialien eingegeben sind, so bedeutet dies nicht, daß für die Realisierung des Verfahrens nach der Erfindung diese Reihenfolge eingehalten werden muß bzw. daß alle Materialien einmal vorkommen. Je nach der Art des zu behandelnden Abwassers können hierbei im Rahmen der Angaben im Anspruch 1 einzelne Mineralien oder Füllkörperarten weggelassen werden. Insbesondere empfiehlt es sich auch, gewisse Stoffe an verschiedenen Stellen der Steigleitung wiederholt einzusetzen. So ist es beispielsweise bei saurem Abwasser zweckmäßig, die Stufen 1 bis 4 erstmals zu wiederholen, ehe das Abwasser dann über Füllkörper aus Tonmineralien oder Metall und dann durch Kieselgur oder Kalksteinriesel geführt wird.

Zu Neutralisation können auch Füllkörper, beispielsweise in Form von Kugeln verwendet werden, die aus Tonmineralien/Korung und Kalkstein/Hochofenschlacke, Braunkohlenschlacke und Quarz bestehen.

Zusätzlich zu den genannten Stoffen können insbesondere im Oberen Bereich der Steigleitung, in welcher schon ein wesentlicher Abbau des Abwassers erfolgt ist, Schichten aus Füllkörper aus Kunststoff, z.B. Nylon®, PVC oder Polyamidkörpern eingesetzt werden, an welchen dann besonders gut eine biologische Reinigung erfolgt.

Die einzelnen Materialien, und insbesondere die zur Neutralisation zu verwendenden Materialien, werden geringfügig im Laufe des Reinigungsprozesses im Volumen reduziert, so daß es sich empfiehlt, in einem zeitlichen Abstand von beispielsweise ein bis zwei Jahren die Materialien in der Steigleitung selbst auszuwechseln bzw. zu ergänzen.

Im folgenden wird nun der mögliche Aufbau von verschiedenen Filterbehältern erläutert, wie sie im Rahmen der Erfindung mit Vorteil verwendet werden können.

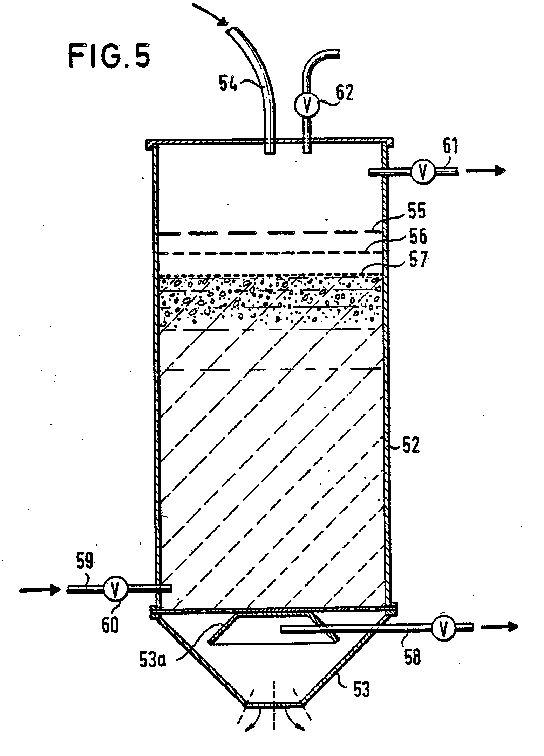

Hierbei wird zunächst anhand der Fig. 5 der grundsätzliche konstruktive Aufbau einer Filterbehälters erläutert, wie er als erste und gegebenenfalls auch als einzige Filterstufe bei einer Vorrichtung nach der Erfindung eingesetzt werden kann.

Dieser erste Filterbehälter, der im gleichen konstruktiven Aufbau auch als Auffangcontainer am Eingang der Wasserreinigungsanlage eingesetzt werden kann, besteht im wesentlichen aus zwei Behälterteilen 52 und 53, wobei das Behälterteil 52 das eigentliche Filter darstellt, während der Behälter 53 die Funktion des Schlammsammelbeckens übernimmt.

Das über die Steigleitung ankommende weitgehend gereinigte Abwasser wird über die Zuführleitung 54 zugeführt. In dem Filter selbst sind zunächst drei Siebe, und zwar das Lochsieb 55, das Grobsieb 56 und das Feinsieb 57 angeordnet. Auf die Siebe selbst, welche aus einem entsprechend grob- bzw. feinmaschigen Drahtgeflecht bestehen, können Porenfliese zunächst beliebiger Stoffzusammensetzung mit ausreichender Porenöffnung aufgelegt sein.

Die untere Begrenzungswand des Behälterteils 52 ist ebenfalls mit Löchern versehen, durch welche die sich absetzenden Schlammstoffe in den Schlammsammelbehälter 53 gelangen. Aus dem Behälter 53 kann der Schlamm in an sich bekannter Weise, z.B. durch Aufklappen der Bodenwände entnommen, aber auch abgesaugt werden. Die hierzu notwendigen konstruktiven Einzelheiten liegen im Rahmen fachmännischen Könnens.

Das entsprechend gereinigte Wasser kann über den Auslaufstutzen 58, der mit einem Sperrschieber versehen ist, entnommen werden. Der Auslaufstutzen 58 ist hierbei so angeordnet, daß er das Wasser im Schlammbehälter 53 möglichst an der Oberfläche des sich in diesem Behälter ansammelnden Wassers abnimmt. Dadurch ist gewährleistet, daß wenigstens keinerlei Schlammrückstände mehr entnommen werden. Um die Wasserentnahme in einen Bereich zu verlegen, in dem das Wasser möglichst wenig durchwirbelt wird, sind die Abweisblenden 53a vorgesehen, die den Bereich des Wasserentnahme gegen das von ober hindurchtretende Wasser abschirmen.

Der Filter behälter bzw. der Auffangbehälter kann rückgespült werden. Hierzu wird Druckwasser über den Zufuhrstutzen 59, welcher mit dem Absperrschieber 60 versehen ist, zugeführt. Dieses Druckwasser durchströmt den Filterbehälter von unten nach oben, und reinigt hierbei Füllkörper, aber auch die einzelnen Siebe. Es verläßt den Filterbehälter wieder über den Abflußstutzen 61. Während der Rückspülung werden jeweils die Zuführ- und Abführleitungen abgesperrt und damit das abgelagerte Material herausgespült.

Eine Rückspülung des Filter behälters kam ohne nachteilige Beeinflüssung des Reinigungsvorganges während des Reinigungsvorganges selbst durchgeführt werden.

Im Deckel des Behälters ist noch ein Überdruckventil 62 vorgesehen, des dafür sorgt, daß sofern Abflußsiebe und/oder die einzelnen Siebe verstopft sind, sich nicht ein unzulässig hoher Überdruck aufbauen kann. Uber dieses Ventil kann auch die beim Durchlaufen gegebenenfalls freiwerdende Luft, welche sich unter dem Deckel ansammelt, abgenommen werden. Diese freiwerdende Luft kann an anderer Stelle als 70 injizierende Luft dem Abwasser wieder zugesetzt werden, wobei gegebenenfalls der sich im Behälter bildende Überdruck unmittelbar ausgenützt werden kann.

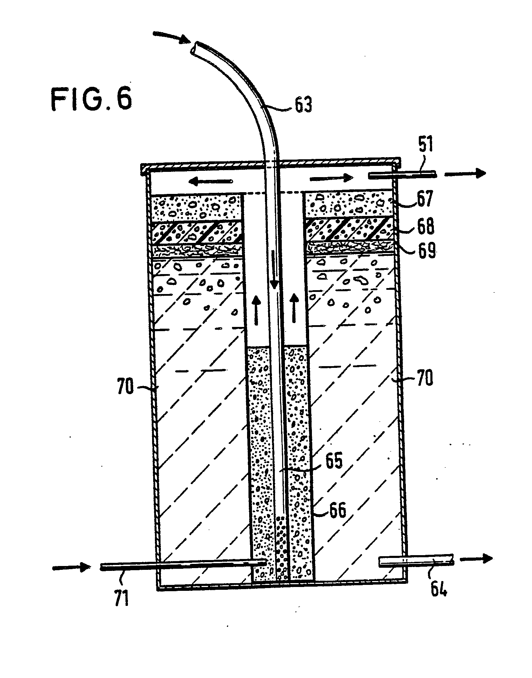

Anhand der Fig. 6 wird in Verbindung mit einem "konzentrischen Doppelfilter" der Aufbau eines Filterbehälters erläutert, wie er im Rahmen der Erfindung als Hauptabbauelement eingesetzt werden kann. Der Filterbehälter weist wiederum eine Zuführleitung 63 auf, über welche das inder Steigleitung entsprechend vorgereinigte Abwasser zugeführt wird. Der Auslauf 64 befindet sich im unteren Bereich und gibt das durch das Filter abgesetzte und entsprechend gereinigte Abwasser ab, un zwar entweder für eine nächste als Nachklärstufe wirkende Filtereinheit, oder aber auch unmittelbar zur weiteren Verwendung.

Da zu reinigende Wasser wird zunächst über ein Innenrohr 65 auf den Boden eines konzentrischen Innenrohrs 66 geführt. Am Boden tritt es durch die entsprechenden Bohrungen in das Innenrohr 66 ein, welches mit Riesel von mittlerer oder feinkörniger Größe angefüllt ist. Das Wasser steigt zwischen diesem Riesel nach oben und gelangt von der Oberseite über drei Siebschichten 67, 68, und 69 in den eigentlichen Filterraum.

Hierbei ist—ähnlich wie anhand der Fig. 5 bereits erläutert—die Schicht 67 wieder mit den größten Durchlauföffnungen versehen. Diese besteht beispielsweise aus Lavatuff, aus Kunststoffschnitzeln oder aber aus stückigen feinporigen Kunststoffformteilen. Die Schicht 68 hat feinere Öffnungen und besteht vorzugsweise aus Hartschaumgummi, wobei die Schicht auch aus Schaumgummischnitzeln oder aus Schaumgummiformteilen, welche zwischen zwei Halteschichten eingebracht werden, gebildet sein kann. Die Schicht 69 schließlich ist feinporiger Kunststoff, beispielsweise ein Porenvlies, Glaswolle oder dergleichen.

Die Füllung des Filterbehälters 70 schließlich besteht aus einem Gemisch aus Hyrakohle, Riesel und Quarz in einer Korngröße, die zwischen 0,5 und 5 mm, vorzugsweise zwischen 1 und 2 mm liegt.

Um eine Rückspülung zu ermöglichen, ist ein Wassereinlauf 71 und ein Auslaufstutzen 51 vorgesehen. Über diese Anschlüsse kann das Filter regelmäßig rückgespült werden, wobei die Praxis ergeben hat, daß mit etwa 1% der seit der letzten Durchspülung durchlaufenen Wassermenge eine brauchbare Säuberung insbesondere der Siebschichten 67, 68 und 69 ergibt. Das schmutzbelastete Rückspülwasser wird entweder einem Absatzbecken oder einer erneuten Reinigung in der gleichen Anlage zugeführt.

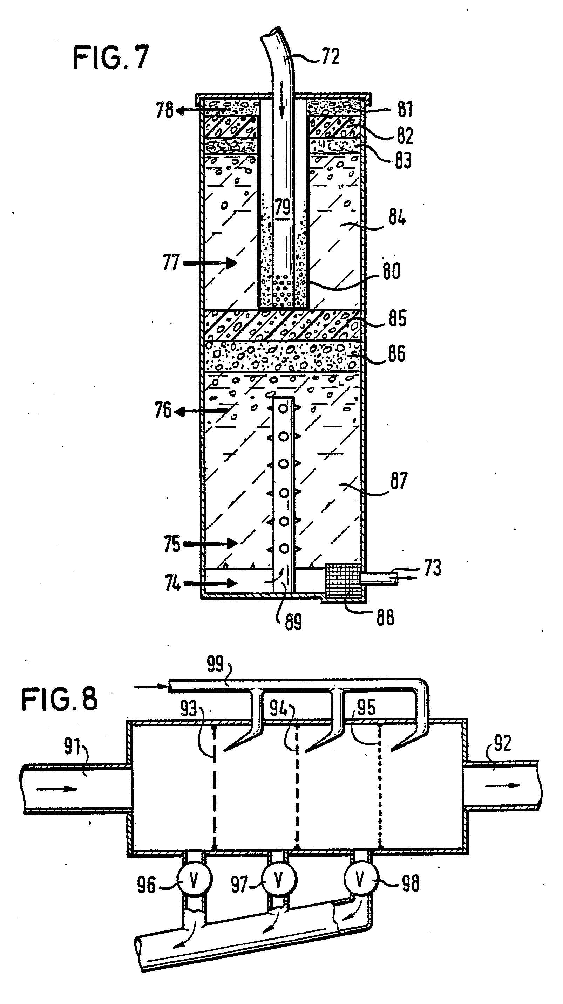

Die Fig. 7 zeigt einen Aufbau eines Doppelfilterbehälters, wie er gemäß einer vorteilhaften Ausgestaltung für das Verfahren nach der Erfindung Verwendung finden kann. Hierbei ist die im folgenden erläuterte Filterfüllung speziell für die letzte Stufe eines Filtersystems anzuwenden, wobei bei entsprechend geringer Schmutzlast ein derartig aufgebautes Filter auch als einzige Stufe nach der entsprechend aufgebauten Steigleitung eingesetzt werden kann.

Dem Doppelfilter behälter, wie er in der Fig. 7 dargestellt ist, wird as von der Steigleitung kommende mit atmosphärischer Luft stark durchsetzte Abwasser über die Eintragsleitung 72 zugeführt. Das endgültig gereinigte Wasser tritt über die Ausgangsleitung 73 aus und kann dem normalen Wasserhaushalt zugeführt oder aber bei Anwendung der Anlage zur Reinigung von industriellem Abwasser im Wege des Recycling erneut dem Fertigungsprozeß zugeführt werden. Aus Übersichtlichkeitsgründen sind nicht sämtliche Zuführungs- und Abführungsanschlüsse, die für den Betrieb des Filters von Bedeutung sind, in körperlicher Darstellung wiedergegeben, sondern in Form von Pfeilen. Es handelt sich hierbei um die Pfeile 74 bis 78, die jeweils Anschlüsse für Heißdampf (Anschluß 74) bzw. für Spülwasser (Anschlüsse 75 bis 78) zum Rückspülen der beiden Filtereinheiten darstellen. Auf diese für die Aufrechterhaltung des Betriebs notwendigen Anschlüsse der Filterbehälter wird an späterer Stelle noch eingegangen werden.

Das zu reinigende Wasser wird über das Inneneintragsrohr 79 eingebracht und steigt dann in dem das Eintragsrohr konzentrisch umgebende Innenrohr 80 wiederum nach oben. Dieses konzentrische Innenrohr 80 ist mit stückigem Kohlenmaterial, sogenannter Hydrakohle, sowie Natursteinen (Rieseln) und Lavatuffstücken angefüllt. Durch das Emporsteigen des mit Sauerstoff angereicherten Wassers bildet sich auf den Rieseln und dem Lavatuff sehr rasch ein äußerst wirksamer biologischer Rasen, der, wie schon ausgeführt zu einer guten Enzymbildung führt.

Das Wasser steigt nach oben, und verteilt sich über die ganze Fläche des Filters. Hierbei sind wiederum—und das ist für alle Filter zur Verwendung im Rahmen des Verfahrens typisch—drei Siebschichten 81, 82 und 83 vorgesehen, wobei die erste Siebschicht 81 das größte Sieb darstellt und im allgemeinen aus Lavatuffsteinen gebildet wird.

Unter dieser Oberschicht ist eine Schicht aus porösem Kunststoff, z.B. Hartschaumgummi oder einem Geflecht aus Polyamidfasern, Polyacrylnitril, Zelluloseacetat, Polyester oder sonstigen Kunststoffasern vorgesehen. Diese zweite Schicht 82 stellt ein Sieb mit mittlerer Sieböffnung dar.

Die unterste der drei Schichten, nämlich die Schicht 83, ist aus einem Porenvlies gebildet mit relativ feinen Öffnungen, so daß das durch die drei Schichten hindurchtretende Wasser von Schwebeteilchen praktisch befreit wird. Anstelle von Porenvlies kann an dieser Stelle auch Glaswolle oder ein poröser Hartschaumgummi mit entsprechend feinen Öffnung vorgesehen werden.

Die im Anschluß an die Siebschichten zu durchströmende Filterschicht besteht aus einer Mischung von körnigem Gut, und zwar vorzugsweise aus Kohle in einer Stückgröße von 1 bis 2 mm Durchmesser. Quarzsand der gleichen Größenordnung sowie Kieselsteine (Riesel) und/oder für eine Biofiltration aus synthetischen Granulaten in der gleichen Größe. In diesem Bereich des Filter behälters findet dann erneut ein biologischer Abbau statt, wobei durch die Verwendung des Quarzsandes und der Riesel eine weitere mechanische Filterung in Kombination mit dem biologischen Abbau zustandekommt.

Das Wasser strömt dann breitflächig durch ein Kunststoffsieb 85 in den zweiten Teil des Doppelfilterbehälters. Dieses Kunststoffsieb ist wiederum aus Polyamidfasern gebildet, an welche sich eine Schicht 86 aus nicht aktiver Hydrakohle anschließt. Der Raum 87 schließlich ist mit Aktivkohle gefüllt, die dann in einer relativ kurzen Kontaktzeit (3 bis 5 Minuten) die letzten Milligramm der Schmutzlast aus dem Wasser entfernt.

Durch ein Mikrofiltersieb 88 aus Polyamid oder anderen Kunststoffasern verläßt dann das gereinigte Wasser den Doppelfilterbehälter. Die vorstehend erläuterten Materialien werden im Filterbehälter nach der Erfindung auch räumlich in jeweils ausgeprägten Schichten untergebracht, wobei mit Hilfe von Siebgeflechten dafür Sorge getragen ist, daß sich die Materialien nicht zu stark durchmischen, sondern im wesentlichen an dem vorbestimmten definierten Abschnitt des Filter behälters verbleiben.

Die räumliche Fixierung ist auch deshalb notwendig und vorteilhaft, weil die Filterbehälter nach der Erfindung von Zeit zu Zeit rückgespült werden, um ihre Funktionsfähigkeit voll zu erhalten, bzw. wieder herzustellen. Für die Rückspülung des unteren Bereiches sind die beiden Anschlußstutzen 75 und 76 vorgesehen und für den oberen Bereich die Anschlußstutzen 77 und 78 Dabei wird jeweils über die Zuflußleitungen Druckwasser zugeführt, das in den einzelnen Filterbereichen nach oben gepreßt wird und hierbei den abgelagerten Schmutz herausspült, der dann durch die zugehörigen Abflußstutzen 76 bzw. 78 abgeführt wird.

Auch in diesem Fall hat sich für die Praxis ergeben, daß mit etwa 1% der im Reinigungsprozeß durch den Filter behälter geführten Wassermenge eine Rückspülung mit Erfolg durchgeführt werden kann, wobei dieses für die Rückspülung verwendete Wasser besonders hoch verschmutzt wird und dann dem Absatzbecken oder aber der Anlage selbst unmittelbar wieder zugeführt werden kann. Die Schwebstoffe gelangen dann bei nächsten Durchlauf in das Schlammsammelbecken.

Bei dem beschriebenen Doppelfilterbehälter ist im letzten Bereich, d.h. im unteren Teil des Filters Aktivkohle vorgesehen, welche von Zeit zu Zeit regeneriert werden muß. Hierzu ist in dem Filter ein Leitungs-Düsensystem 89 eingebaut, dem über den Anschlußstutzen 74 Heißdampf zugeführt wird. Dieser Heißdampf tritt über die Düsen in den Bereich der zu aktivierenden Kohle 87 aus und ermöglicht die Reaktivierung dieser Kohle unmittelbar im Filterbereich, d.H. also ohne daß die Kohle aus dem Filter herausgenommen werden müßte. Der Heißdampf selbst kann dann über den Abflußstutzen 76 ebenso wie das Rückspülwasser austreten. Der Regenerierungsprozeß durch die Rückspülung, die Einführung von Heißdampf und Heißluft ermöglicht eine thermische Teilregenerierung der Aktivkohle und gleichzeitig eine thermische Aktivierung oder Regenerierung der allgemeinen Adsorptionsmedien (Spezialkoks hochgesintert, Hochofenschlacke und Tonmineralien).

Das gemäß dem Verfahren nach der Erfindung zu reinigende Abwasser sollte möglichst frei von stückigen Feststoffen sein, da diese in dem geschlossenen Leitungs- und Filtersystem den Durchfluß des Wassers nachteilig beeinflussen könnten, bzw. die ganze Anlage verstopfen würden. Es empfiehlt sich bei Abwässern, bei denen derartige Feststoffe auftreten könnten, der Anlage einen Feststoffseparator voranzuschalten. Einen derartigen Feststoffseparator, wie er im Rahmen einer Anlage nach der Erfindung verwendet werden kann, zeigt die Fig. 8. Ein derartiger Feststoffseparator kann dabei zusätzlich zu einem eigenen Auffangcontainer, Sandfang oder dergleichen oder auch zusätzlich eingebaut werden. Bei textilen Abwässern ist ein Flusenabscheider erforderlich.

Dieser Feststoffseparator besitzt ein Einlaufrohr 91, über welches das auch noch mit größeren Schwebstoffen belastete Wasser ankommt. Dieses Waser soll von diesen großen mitgeführten Stoffen gereinigt werden und über das Auslaufrohr 92 der Reinigungsanlage zugeführt werden. Hierzu strömt es gegen die Siebe mit in Flußrichtung sich verkleinernden Sieböffnungen 93, 94 und 95. Da die Gefahr besteht, daß diese Siebe bei stark schmutzhaltigem Wasser rasch verstopft werden, müssen diese Siebe regelmäßig gereinigt werden. Dies geschieht mit Hilfe der Druckluft- oder auch Druckwasserdüsen, die über das Verteilersystem 99 regelmäßig mit Druckmedium versorgt werden. Dabei werden gleichzeitig die Ventile 96, 97 und 98 geöffnet, wodurch der ganze Rückstand abgeführt wird, beispielsweise in ein Schlammbecken.

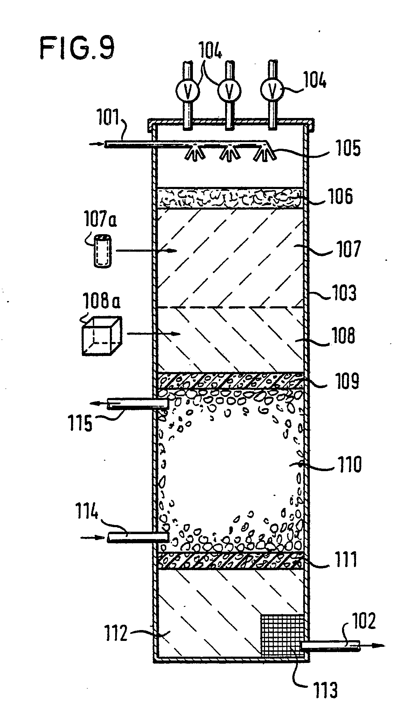

Fig. 9 schließlich zeigt einen kombinierten Filterbehälter mit Tropfkörpereigenschaften, wie er insbesondere in einstufigen Filteranlagen zur Durchführung des Verfahrens nach der Erfindung eingesetzt werden kann. Hierbei ist auch dieses Filter zweistufig aufgebaut, wobei die Tropfkörperfunktion in der oberen Hälfte erreicht wird.

Das zu reinigende Abwasser tritt über den Einlauf 101 ein und verläßt entsprechend gereinigt diesen Container durch das Auslaufrohr 102. Auch bei diesem kombinierten Tropfkörper-Filterbehälter handelt es sich um einen geschlossenen Körper mit der Wandung 103. Da gerade bei "Tropfkörperreinigung" mit Gasbildung zu rechnen ist, und beim Tropfen die aufgenommene atmosphärische Luft frei wird, sind Überdruckventile 104 vorgesehen, über die diese Gase in ein entsprechendes Reservoir abgeführt bzw. dem Reinigungsprozeß wieder zugeführt werden können.

Im Gegensatz zu den anderen Filter behältern, wird das zu reinigende Wasser großflächig eingebracht, was durch die Verteiler 105 angedeutet ist. Diese Verteilung wird durch eine poröse Schicht 106, die gleichzeitig auch als Dämmschicht für Wärmeabgabe dienen soll, verstärkt. An dieser Stelle eignet sich besonders ein Porenvlies aus synthetischem Fasergewebe oder eine Schicht aus Glaswolle.

Das Wasser tropft dann durch den ersten Teil 107 des Tropfkörper bereichs mit den Hohlkörpern 107a aus Kunststoff oder mehr oder weniger poröser Keramik sowie dem zweiten mit Füllkörpern 108a gefüllten Teil 108.

Im unteren Teil 110 des Filterbehälters mit Tropfkörpereigenschaft sind wieder Formstücke aus Kohle, Hochofenschlacke, Riesel, Kunststoff und/oder Quarzsand vorgesehen, wobei dieser Teil durch die obere Kunststoffschicht 109 und die untere Hartgummischicht 111 abgetrennt ist. Dieser Teil des Filterbehälters ist über das Zuführrohr 114 und Abführrohr 115 rückspülbar, während der Tropfkörperteil 107 und 108 nicht rückgespült werden darf, um den sich auf den Tropfkörpern 87 a bzw. 88a bildenden biologischen Rasen nicht zu zerstören.

Schließlich befinden sich am untersten Bereich 112 wieder Kohlestücke, Riesel, feinkörnige Antrazithkohlenstücke, feinkörnige Hochofenschlacke, feinkörniges Gesteinsmaterial, feinkörniger Quarz, feinkörniges Cevilith und Bims gemischt, vorteilhafte Körnungen 1—3 mm, um die kombinierte Reinigung zu vollenden bzw. fortzusetzen.

Das durch diesen kombinierten Filterbehälter gereinigte Wasser muß dann noch ein Fasersieb 113 durchströmen, ehe es den Behälter verläßt.

Das Verfahren nach der Erfindung wurde anhand stark schematisierter Anlagenteile in Form von verschiedenen Filterbehältern erläutert und demonstriert. Für den mit Fragen der Abwasserreinigung befaßten Fachmann ist aufgrund dieser Erläuterung der Aufbau der einzelnen Filterbehäter ohne weiteres möglich, ohne daß die vorliegende Patentanmeldung mit weiteren konstruktiven Details ergänzt werden müßte.

Gemäß einer Abwandlung kann die Durchströmeinrichtung des mit Luft versetzten, zu reinigenden Wassers in den einzelnen Filterbehältern in umgekehrter Richtung, also auch von unten nach oben mit Vorteil angewendet werden.

Die Art, wie zur Reinigung des Abwassers einerseits Luft eingebracht wird und andererseits Kohlenstoff zugeführt wird, wodurch die vorerwähnten sehr raschen Abbauwerte selbst bei rein kolloidal verschmutztem Wasser zu erzielen sind, kann auch dazu verwendet werden, um umgekehrt aus entsprechend belastetem Wasser Eiweißstoffe (Enzyme) zu gewinnen. Diese Enzyme werden bei der Abwasserreinigung einfach ausgefiltert und beim anschließenden Rückspülen auch zur Gewinnung dieser Enzyme in speziellen Anlagen herausgefiltert.

## Patentansprüche

1. Verfahren zum Reinigen von industriellen und/oder Kommunalen Abwässern unter Verwendung einer mehrstufigen Filteranlage, der das zu reinigende Abwasser mechanisch vorgereinigt und/oder vorgeklärt zugeführt wird, wobei dem Abwasser Sauerstoff oder atmosphärische Luft (im folgenden pauschal Luft genannt) in einem Behälter zugeführt wird, indem dem Behälter die Luft mit einem Druck, der größer ist als der, der dem hydrostatischen Druck entspricht, zugeführt wird, und wobei das so mit Luft angereicherte Wasser durch eine dem Verschmutzungsgrad angepaßte Anzahl von Filtern in Form von geschlossenen mit Füll- und Filterkörpern gefüllten Behältern geführt wird, dadurch gekennzeichnet, daß der Lufteintrag im unteren Bereich eines als Steigleitung ausgebildeten Behälters, in feinst verteilter Form über eine Vielzahl von Eintragdüsen durchgeführt wird, wobei oberhalb des Lufteintragbereiches eine Mehrzahl von eng aufeinanderfolgenden, im Weg des zu reinigenden Wassers abwechselnden, zur Neutralisation, zur mechanischen, biologischen, katalytischen und adsorptiven Reinigung dienende Filterschichten vorgesehen sind, von denen mindestens eine Schicht stückigen Kalkstein und mindestens eine stückige Hochofenschlacke, stückige Braunkohlenschlacke bzw. Cewilith (aufbereitete Schmelzkammer-(Granulat)-Schlacke) aufweist, und daß das so mit Luft angereicherte und über diese Schichten geführte Abwasser anschließend über ein geschlossenes Leitungssystem einem Filtersystem mit mindestens einem Filterbehälter zugeführt wird, in welchem die einzelnen Reinigungsmethoden mit Hilfe von vorzugsweise ebenfalls in eng aufeinanderfolgenden Schichten angeordneten Filterkörpern zur mechanischen, biologischen, katalytischen und adsorbtiven Reinigung durchgeführt werden.

2. Verfahren nach Anspruch 1, dadurch gekennzeichnet, daß das zu reinigende Wasser vor dem Lufteintrag über eine Vorneutralisationsstufe geführt wird.

3. Verfahren nach Anspruch 1, dadurch gekennzeichnet, daß das zu reinigende Wasser vor Eintritt in das Filtersystem durch die mindestens 3 m, vorzugsweise 5 bis 6 m lange zumindest teilweise mit Füllkörpern zur Neutralisation, kalten Oxidation, biologischen Reinigung und/oder Adsorption angefüllte Steigleitung geführt wird.

4. Verfahren nach einem der Ansprüche 1 bis 3, dadurch gekennzeichnet, daß das zu reinigende Wasser mit Kohlegries, z.B. reinem Kohlenstoff, angereichert wird.

5. Verfahren nach Anspruch 4, dadurch gekennzeichnet, daß der Kohlenstoff vor der Zuführung des zu reinigenden Wassers in das Reinigungssystem beigegeben wird.

6. Verfahren nach Anspruch 1 bis 4, dadurch gekennzeichnet, daß der Kohlenstoff vor dem Einlauf in die erste Filterstufe beigegeben wird.

7. Verfahren nach Anspruch 1 bis 6, dadurch gekennzeichnet, daß das zu reinigende Wasser in dem Filtersystem mehrfach einer Entspannungs-Flotation, einer biochemischen Umwandlung durch Bildung und Bildung von Organismen, einer Biofiltration, einer Feinstfiltration und einer allgemeinen Adsorption oder Adorption mit Aktivkohle in jeweils im Vergleich zum gesamten Durchlaufweg des Wasser kurzen Abschnitten ausgesetzt wird.

8. Verfahren nach Anspruch 1, dadurch gekennzeichnet, daß das zu reinigende Wasser dem Lufteintrag unter einem Überdruck von 2,94 bar (3 atü) ausgesetzt wird.

9. Verfahren nach Anspruch 8 oder 9, dadurch gekennzeichnet, daß die atmosphärische Luft mit einem Überdruck zugeführt wird, der etwa 10% über dem Druck des zu reinigenden Wassers liegt.

10. Verfahren nach einem der vorhergehenden Ansprüche, dadurch gekennzeichnet, daß das aus den einzelnen Filtern ausströmende Abluftgemisch der Vorneutralisierungsstofe (Behälter) zugeführt wird.

11. Vorrichtung zur Durchführung des Verfahrens zum Reinigen von industriellen und/oder kommunalen Abwässern nach Anspruch 1 bis 10, dadurch gekennzeichnet, daß ein aus mindestens einem Filterbehälter bestehendes Filtersystem vorgesehen ist, welchem das zu reinigende Wasser über eine vorzugsweise senkrecht angeordnete Steigleitung von wenigstens 3 m, vorzugsweise 5 bis 6 m Steighöhe von oben zugeführt wird, daß im unteren Bereich der Steigleitung eine aus einer Vielzahl von Zuführdüsen bestehende Lufteintragsvorrichtung vorgesehen ist und daß in der Steigleitung Füllkörper zur Neutralisation, biochemischen und biologischen Reinigung, zur Biofiltration und/oder zur Adsorption über einen Großteil der Höhe angeordnet sind, von denen mindestens eine Schicht stückigen Kalkstein und mindestens eine stückige Hochofenschlacke, stückige Braunkohlenschlacke bzw. Cewilith (aufbereitete Schmelzkammer - (Granulat)- Schlacke) aufweist.

12. Vorrichtung nach Anspruch 11, dadurch gekennzeichnet, daß zur Neutralisation ein kombinierter Füllkörper aus Tonmineralien oder Sinterkorund, gekörntem Kalkstein, gekörnter Hochofenschlacke, gekörnter Braunkohlenschlacke und Quarz vorgesehen ist.

13. Vorrichtung nach Anspruch 11, dadurch gekennzeichnet, daß zur katalytischen Oxidation (kalte Oxidation) Metallkörper, vorzugsweise aus Edelmetallen oder aus Eisen, Edelstahl bzw. Eisenlegierungen vorgesehen sind.

14. Vorrichtung nach Anspruch 11, dadurch gekennzeichnet, daß als Füllkörper Hydrakohle (nichtaktivierte, feinkörnige Anthrazitkohle) Quarzsand und/oder Riesel in einer Stückgröße von 1 bis 5 mm, vorzugsweise 2 mm vorgesehen sind.

15. Vorrichtung nach Anspruch 11, dadurch gekennzeichnet, daß zur Durchführung einer kalten Oxidation Körper aus Glas, Quarz und/oder Ton- und anderen Mineralien vorgesehen sind.

16. Vorrichtung nach Anspruch 11 bis 15, dadurch gekennzeichnet, daß die einzelnen Mineralien durch Filterschichten, z.B. Filtersiebe, voneinander getrennt sind.

17. Vorrichtung nach einem der Ansprüche 11 bis 16, dadurch gekennzeichnet, daß in den einzelnen Reinigungsstufen Körper in Form von Ringen, Sätteln oder Kugeln aus Kunststoff, z.B. aus Weich- oder Hartschaumstoff, z.B. auf Polyurethanbasis, Polyäthylen, Polypropylen, Polystyrol vorgesehen sind.

18. Vorrichtung nach Anspruch 17, dadurch gekennzeichnet, daß die Füllkörper aus Kunststoff mit Körpern aus Glas, Kohlenstoff, Tonmineralien durchsetzt sind bzw. mit diesen Stoffen Körper bilden.

19. Vorrichtung nach Anspruch 16, dadurch gekennzeichnet, daß die einzelnen Filterschichten durch flächenförmigen porösen Kunststoff, welcher auf einem Metallsieb aufliegt, unterteilt sind.

20. Vorrichtung nach einem der vorhergehenden Ansprüche 11 bis 19 dadurch gekennzeichnet, daß in dem Umlenkrohr zwischen Steigleitung und Filterbehälter ein Überdruckventil angebracht ist, über welches frei werdendes Gasgemisch zum erneuten Lufteintrag abnehmbar ist.

21. Vorrichtung nach Anspruch 11 bis 20, dadurch gekennzeichnet, daß zur katalytischen Oxidation und zur Biofiltration feinstkörniges, gemischtes, Gesteinsmaterial vorgesehen ist.

22. Vorrichtung nach einem der vorhergehenden Ansprüche 11 bis 21, dadurch gekennzeichnet, daß zumindest in einzelnen Verbindungsleitungen zwischen Steigleitung und Filterbehältern Füllkörper enthalten sind.

23. Vorrichtung zur Durchführung des Verfahrens nach Anspruch 10, dadurch gekennzeichnet, daß am Boden des Vorneutralisierungsbehälters ein mit vorzugsweise 1000 Düsenöffnungen versehenes Verteilerkreuz vorgesehen ist, über das das Abluft- (Gas-)gemisch aus den Filtern ausströmt.

**Revendications**

1. Procédé pour épurer des eaux résiduaires industrielles et/ou communales en utilisant une installation de filtration à plusieurs étages, à laquelle l'eau résiduaire à épurer est envoyée en étant épurée par voie mécanique ou clarifiée au préalable, de l'oxygène ou de l'air atmosphérique (désigné globalement ci-après par air) étant amené à l'eau résiduaire dans un récipient, en envoyant dans le récipient de l'air sous une pression qui est supérieure à celle qui correspond à la pression hydrostatique, et l'eau ainsi enrichie en air passant dans un nombre de filtres, en forme de récipients fermés et emplis de corps de charge et de corps filtrants, adaptés au degré de pollution, caractérisé en ce qu'il consiste à effectuer l'introduction d'air dans la région inférieure d'un récipient agencé en conduit montant, sous une forme très finement divisée par un grand nombre de buses d'introduction, plusieurs couches filtrantes étroitement supérposées en alternance sur le trajet de l'eau à épurer et servant à la neutralisation, à l'épuration par voies mécanique, biologique, catalytique et par adsoprtion étant prévues au-dessus de la région d'introduction de l'air, l'une au moins des couches comportant de la pierre à chaux en morceaux et au moins un laitier de haut-fourneau en morceaux, un laitier de lignite en morceaux ou du Cewilith (laitier traité en grains de four de fonderie), et à envoyer ensuite l'eau résiduaire ainsi enrichie en air et ayant passé sur ces couches, par un système de canalisations fermées à un système de filtration ayant au moins un récipient de filtration dans lequel sont effectuées, pour l'épuration par voies mécanique, biologique, catalytique et par adsorption, les diverses méthodes d'épuration à l'aide de corps filtrants disposés de préférence également en couches étroitement superposées.

2. Procédé suivant la revendication 1, caractérisé en ce qu'il consiste à envoyer l'eau à épurer avant l'entrée d'air dans un étage de préneutralisation.

3. Procédé suivant la revendication 1, caractérisé en ce qu'il consiste à envoyer l'eau à épurer avant l'entrée dans le système de filtration dans un conduit montant d'au moins 3 mètres de longueur et, de préférence, de 5 à 6 mètres de longueur, empli au moins partiellement de corps de charge pour la neutralisation, l'oxydation froide, l'épuration biologique et/ou l'adsorption.

4. Procédé suivant l'une des revendications 1 à 3, caractérisé en ce qu'il consiste à enricher l'eau à épurer de charbon menu, par exemple de carbone pur.

5. Procédé suivant la revendication 4, caractérisé en ce qu'il consiste à ajouter le charbon avant l'entrée de l'eau à épurer dans le système d'épuration.

6. Procédé suivant les revendications 1 à 4, caractérisé en ce qu'il consiste à ajouter le carbone avant l'entrée dans le premier étage de filtration.

7. Procédé suivant les revendications 1 à 6, caractérisé en ce qu'il consiste à soumettre l'eau à épurer dans le système de filtration plusieurs fois à une flottation avec détente, à une transformation biochimique par formation et fixation d'organismes, à une biofiltration, à une filtration très fine et à une adsorption en général ou à une absorption par du charbon actif, respectivement des tronçons courts en comparaison de tout le trajet de passage de l'eau.

8. Procédé suivant la revendication 8, caractérisé en ce qu'il consiste à soumettre l'eau à épurer à une entrée d'air sous une surpression de 2,97 bars.

9. Procédé suivant la revendication 8, caractérisé en ce qu'il consiste à envoyer l'air atmosphérique sous une surpression qui est supérieure de 10% environ à la pression de l'eau à épurer.

10. Procédé suivant l'une des revendications précédentes, caractérisé en ce qu'il consiste à envoyer le mélange d'air résiduaire sortant des filtres individuels à un étage de préneutralisation (récipient).

11. Dispositif pour la mise en oeuvre du procédé d'épuration d'eaux résiduaires industrielles et/ou communales suivant les revendications 1 à 10, caractérisé en ce qu'il est prévu un système de filtration constitué d'au moins un récipient de filtration auquel l'eau à épurer est envoyée, par le haut, par un conduit montant disposé de préférence verticalement d'au moins 3 mètres de hauteur et, de préférence, de 5 à 6 mètres de hauteur, en ce que dans la région inférieure du conduit montant, est prévu un dispositif d'introduction d'air constitué d'un grand nombre de buses d'entrée et en ce que, dans le conduit montant, sont disposés sur une grande partie de la hauteur, pour la neutralisation, pour l'épuration biochimique et biologique, pour la biofiltration et/ou pour l'adsorption, des corps de charge dont au moins une couche comporte de la pierre à chaux en morceaux et au moins un laitier de haut-fourneau en morceaux, un laitier de lignite en morceaux ou du Cewilith (laiter traité en grains de four de fonderie).

12. Dispositif suivant la revendication 11, caractérisé en ce que pour la neutralisation, il est prévu un corps de charge composé de minerais d'argile ou de corindon fritté, de pierre à chaux en grains, de laitier de haut-fourneau en grains, de laitier de lignite en grains et de quartz.

13. Dispositif suivant la revendication 11, caractérisé en ce que pour l'oxydation catalytique (oxydation à froid), il est prévu des corps métalliques, de préférence en métaux nobles ou en fer, en acier noble ou en alliages de fer.

14. Dispositif suivant la revendication 11, caractérisé en ce qu'il est prévu comme corps de charge du charbon hydraté (charbon d'anthracite à grains fins non activé), du sable de quartz et/ou du gravillon en morceaux d'une dimension de 1 à 5 mm et, de préférence, de 2 mm.

15. Dispositif suivant la revendication 11, caractérisé en ce que, pour effectuer une oxydation à froid, il est prévu des corps en verre, en quartz et/ou en minéraux d'argile et en d'autres minéraux.

16. Dispositif suivant les revendications 11 à 15, caractérisé en ce que les minéraux individuels sont séparés les uns des autres par des couches filtrantes, par exemple par des tamis filtrants.

17. Dispositif suivant l'une des revendications 11 à 16, caractérisé en ce que, dans les étages d'épuration individuels, il est prévu des corps sous la forme d'anneaux, de sels ou de billes en matière plastique, par exemple en matière mousse tendre ou en matière mousse dure, par exemple à base de polyuréthane, de polyéthylène, de polypropylène, de polystyrène.

18. Dispositif suivant la revendication 17, caractérisé en ce que les corps de charge en matière plastique sont traversés par des corps en verre, en carbone, en minéraux d'argile, ou forment des corps avec ces matières.

19. Dispositif suivant la revendication 16, caractérisé en ce que les couches filtrantes individuelles sont subdivisées par de la matière plastique poreuse de forme plane qui repose sur un tamis métallique.

20. Dispositif suivant l'une des revendications précédentes 11 à 19, caractérisé en ce que, dans le tuyau de dérivation entre le conduit montant et le récipient de filtration, est montée une soupape de surpression par laquelle un mélange gazeux qui se dégage peut être prélevé en vue d'une nouvelle introduction d'air.

21. Dispositif suivant les revendications 11 à 20, caractérisé en ce que, pour l'oxydation catalytique, et pour la biofiltration, il est prévu un matériau de roches mixtes à grains très fins.

22. Dispositif suivant l'une des revendications précédentes 11 à 21, caractérisé en ce que des corps de charge sont contenus au moins dans des conduites individuelles de mise en communication du conduit montant et des récipients de filtration.

23. Dispositif pour la mise en oeuvre du procédé suivant la revendication 10, caractérisé en ce que, sur le fond du récipient de préneutralisation, est prévu un croisillon formant répartiteur qui est muni, de préférence, de 1000 ouvertures de buse et par lequel le mélange d'air résiduel (gaz) sort des filtres.

**Claims**

1. A process for purifying industrial and/or community waste water using a multi-stage filter plant to which the waste water to be purified is supplied mechanically in a pre-purified and/or pre-clarified state, wherein oxygen or atmospheric oxygen (hereinafter referred to overall as air) is added to the waste water in a container, the air is fed to the container at a pressure which is greater than that corresponding to the hydrostatic pressure, and wherein the water, thus enriched with air, is passed through a number of filters appropriate to the degree of pollution, in the form of sealed containers filled with filling and filter bodies, characterised in that the air is introduced into the lower region of a container in the form of a rising pipe, in the most finely divided form by means of a plurality of input nozzles, a plurality of closely succeeding filter layers being arranged above the air introduction region, which filter layers alternate in the path of the water to be purified and serve for neutralisation, and for mechanical, biological, catalytic and adsorptive purification, and of which at least one layer comprises limestone in lump form and at least one of blast furnace slag in lump form, lignite slag in lump form, and cewelith (granulates of processed melting chamber slag); and that the waste water enriched with air and passed across these layers, is subsequently passed by way of a closed pipe system to a filter system with at least one filter container, in which the individual purification steps are carried out with the aid of filter bodies, which are preferably similarly arranged in closely succeeding layers, for mechanical, biological, catalytic and adsorptive purification.

2. A process as claimed in Claim 1, characterised in that, prior to the introduction of air, the water to be purified is passed across a pre-neutralisation stage.

3. A process as claimed in Claim 1, characterised in that, prior to introduction into the filter system, the water to be purified is passed through the rising pipe, which is at least 3 m, preferably 5 to 6 m, long, and is at least partially filled with filling bodies for neutralisation, cold oxidation, biological purification and/or adsorption.

4. A process as claimed in one of Claims 1 to 3, characterised in that the water to be purified is enriched with carbon granules, e.g. of pure carbon.

5. A process as claimed in Claim 4, characterised in that, prior to the supply of the water to be purified, the carbon is added to the purification system.

6. A process as claimed in Claim 1 to 4, characterised in that the carbon is added before the inlet to the first filter stage.

7. A process as claimed in Claim 1 to 6, characterised in that, in the filter system, the water to be purified is repeatedly subjected to an expansion flotation, a bio-chemical conversion by the formation and bonding of organisms, a bio-filtration, a super-fine filtration, and a general adsorption or adsorption with active carbon in sections which are short in comparison with the overall flow path of the water.

8. A process as claimed in Claim 1, characterised in that the water to be purified is exposed to the introduction of air under an excess pressure of 2.94 bar (3 atm).

9. A process as claimed in Claim 8 or Claim 9, characterised in that the atmospheric air is supplied at an excess pressure which lies about 10% above the pressure of the water to be purified.

10. A process as claimed in one of the preceding Claims, characterised in that the outgoing air mixture leaving the individual filters is fed to the pre-neutralisation stage (container).

11. Apparatus for carrying out the process for purifying industrial and/or community waste water as claimed in Claim 1 to 10, characterised in that there is provided a filter system which consists of at least one filter container and to which the water to be purified is fed from the top through a preferably vertical rising pipe which has a rising length of at least 3 m, preferably 5 to 6 m; that in the lower region of the rising pipe, an air-introducing device which consists of a plurality of feed nozzles, is arranged; and that in the rising pipe, filling bodies for neutralisation, bio-chemical and biological purificaton, for bio-filtration and/or adsorption are arranged over a large part of the height, of which at least one layer exhibits limestone in lump form, and at least one exhibits blast furnace slag in lump form, lignite slag in lump form, or cewelith (granulates of processed melting chamber slag).

12. Apparatus as claimed in Claim 11, characterised in that for neutralisation, a compound filling body is provided which consists of clay minerals or sintered corundum, granulated limestone, granulated blast furnace slag, granulated lignite slag and quartz.

13. Apparatus as claimed in Claim 11, characterised in that metal bodies, preferably made of noble metals or of iron, high-grade steel, or iron alloys, are provided for catalytic oxidation (cold oxidation).

14. Apparatus as claimed in Claim 11, characterised in that Hydra-coal (non-activated, fine-grained anthracite coal), quartz sand and/or pebbles, the piece size being from 1 to 5 mm, preferably 2 mm, are provided as filling bodies.

15. Apparatus as claimed in Claim 11, characterised in that for effecting cold oxidation, bodies made of glass, quartz and/or clay and other minerals, are provided.

16. Apparatus as claimed in Claim 11 to 15, characterised in that the individual minerals are separated from one another by filter layers, e.g. filter sieves.

17. Apparatus as claimed in one of Claims 11 to 16, characterised in that in the individual purification stages, bodies are arranged in the form of rings, saddles or pellets, which consist of synthetic resin, e.g. of soft or hard foam, e.g. having a polyurethane base, polyethylene, polypropylene, or polystyrene.

18. Apparatus as claimed in Claim 17, characterised in that the filling bodies made of synthetic resin are mixed with bodies made of glass, carbon, clay minerals or form bodies together with these substances.

19. Apparatus as claimed in Claim 16, characterised in that the individual filter layers are divided by flat, porous synthetic resin resting on a metal sieve.

20. Apparatus as claimed in one of the preceding Claims 11 to 19, characterised in that a pressure relief valve, by means of which escaping gas mixture can be withdrawn for the renewed introduction of air, is arranged in the return pipe between the rising pipe and the filter container.

21. Apparatus as claimed in Claim 11 to 20, characterised in that very finely granulated mixed rock material is provided for the catalytic oxidation and bio-filtration.

22. Apparatus as claimed in one of the preceding Claims 11 to 21, characterised in that filling bodies are contained at least in individual connecting pipes between the rising pipe and the filter containers.

23. Apparatus for carrying out the process as claimed in Claim 10, characterised in that at the base of the pre-neutralisation container, there is arranged a cross-shaped distributor which is preferably provided with 1000 nozzle openings and through which the outgoing air (gas-) mixture leaves the filters.

FIG.1

# FIG.2

# FIG.3

22

# FIG.4

23

X
IX
VIII
VII
VI
V
IV
III
II
I

4

2

IV          IV

23

III      III
22      21

1

FIG.5

54
62
61
55
56
57
52
59
60
53a
58
53

FIG.6

FIG. 7

FIG. 8

# FIG.9